## Europäisches Patentamt

## European Patent Office

## Office européen des brevets

(11) Veröffentlichungsnummer: **0 238 923**
**B1**

(12) # EUROPÄISCHE PATENTSCHRIFT

(45) Veröffentlichungstag der Patentschrift:
16.08.89

(51) Int. Cl.⁴: **G03B 42/04**

(21) Anmeldenummer: 87103343.7

(22) Anmeldetag: 09.03.87

(54) **Röntgenblattfilmkassette und hierfür geeignete Ent- und Beladevorrichtung.**

(30) Priorität: **21.03.86 DE 3609527**

(43) Veröffentlichungstag der Anmeldung:
**30.09.87 Patentblatt 87/40**

(45) Bekanntmachung des Hinweises auf die Patenterteilung:
**16.08.89 Patentblatt 89/33**

(84) Benannte Vertragsstaaten:
**BE ES FR GB IT**

(56) Entgegenhaltungen:
**EP-A- 0 081 714**
**EP-A- 0 143 755**
**DE-A- 2 517 623**
**US-A- 4 490 027**
**US-A- 4 553 369**

(73) Patentinhaber: **Agfa-Gevaert AG,**
**D-5090 Leverkusen 1(DE)**

(72) Erfinder: **Bauer, Walter, Heinrich-Wieland-Strasse 178,**
**D-8000 München 83(DE)**
Erfinder: **Schmidt, Manfred, Dipl.-Ing., Ligusterweg 34,**
**D-8011 Kirchheim(DE)**

## Beschreibung

Die Erfindung betrifft eine Röntgenblattfilmkassette mit zwei je eine Flachseite aufweisenden, auseinanderklappbaren und miteinander verriegelbaren Kassettenteilen (1, 2), die durch Schmalseiten (1a–1c) genormter, aber bei verschiedenen Kassettentypen unterschiedlicher Länge begrenzt sind, wobei die Kassette in einer Vorrichtung (7) zum Ent- und Beladen von Kassetten unterschiedlicher Typen verwendbar ist und die Kassette in der Vorrichtung (7) an einer bei allen verwendbaren Kassettentypen gegenüber der Vorrichtung in der positionierten Stellung gleichgelagerten, in Eingaberichtung (8) der Kassette in die Vorrichtung stirnseitigen Kassettenecke (1f) positionierbar ist, wobei eine Reihe von wenigstens zwei nebeneinanderliegenden Kodierungsflächenstücken (10a bis 10e), die bezüglich ihrer Magnetisierung oder ihrer elektrischen Leitfähigkeit abtastbar sind, in definierter Lage mit definiertem Abstand von der positionierbaren Kassettenecke (1f) angebracht ist.

Kassetten und Vorrichtungen der eingangs genannten Art sind durch die EP 0 052 159 A1 oder die DE 32 32 187 C2 bekannt geworden. Bei den bekannten Vorrichtungen sind jeder einzelnen Kassettennormbreite und -normlänge von verwendbaren Kassettentypen je ein Mikroschalter oder eine Lichtschranke zugeordnet, die gegen die oder durch die Abtastelemente für eine Kassette oder gegen die Kassette selbst bewegt werden. Weisen die Kassetten größere Toleranzen auf, so kann die genaue Zuordnung der Mikroschalter oder Lichtschranken zu den Normmaßen zu Fehlergebnissen führen, so daß derartige toleranzbehaftete Kassetten dann als nicht ent- und beladbar wieder aus der Vorrichtung heraustransportiert werden. Außerdem sind diese bekannten Anordnungen infolge der zahlreichen Schalter oder Lichtschranken aufwendig und benötigen in Richtung der Kassettenlänge und/oder -breite zusätzlichen Raum. Ein Ausführungsbeispiel nach der erstgenannten Veröffentlichung arbeitet auch mit Mikroschaltern, wobei je ein Mikroschalter im Bereich unter der der zu positionierenden Kassettenecke diagonal gegenüberliegenden Kassettenecke angeordnet ist. Dabei wird eine Schwenkung der die Mikroschalter tragenden Platine bewirkt, wobei die Schwenkung der Größe der eingegebenen Kassette entspricht. Bei dieser Ausgestaltung spielen zwar Kassettentoleranzen keine Rolle. Die hier vorgesehenen Mikroschalter müssen aber über den ganzen Bereich, der durch Kassettenflachseiten überdeckt sein kann, unregelmäßig verteilt sein, was lagerungs- und steuerungsmäßig ungünstig ist. Außerdem ist die hierbei vorgesehene Schwenkung der die Mikroschalter tragenden Platine für eine elektronische Auswertung nicht geeignet und platzraubend.

In der nicht vorveröffentlichten DE-OS 35 33 954 sind Kassetten und eine hierfür geeignete Ent- und Beladevorrichtung der eingangs genannten Art mit einer dem jeweiligen Kassettenformat entsprechenden Strichcodeanordnung auf einer Kassettenflachseite und einem ihm zugeordneten Strichcodeleser im Gerät beschrieben. Dabei läßt sich die Codierung auf der Kassette, z.B. zur Berücksichtigung unterschiedlicher Filmsorten bei einem bestimmten Kassettenformat, nicht ändern oder anpassen bzw. muß für jede einzelne Kassettenformat-Filmkombination ein eigenes Strichcodelabel vorhanden sein und aufgebracht werden.

Durch die US-A 4 553 369 oder die EP-A 81 714 sind zwar Röntgenfilm- oder Planfilmkassetten der eingangs genannten Art mit einem Kodierungsflächenstück, das jeweils mehrere Kodierungselemente aufweisen kann, bekannt. Dieses Kodierungsflächenstück ist aber auf einer Kassettenflachseite, und zwar nach der US-A 4 553 369 im schwenkbaren Kassettendeckel und noch dazu nahe einer dem Kassettenscharnier benachbarten Ecke angeordnet. Diese bekannten Anordnungen setzen voraus, daß entweder eine Kassette mit einem stirnseitigen Filmein- und -ausführschlitz ohne schwenkbaren Deckel oder eine Öffnungsvorrichtung für den Deckel vorgesehen sind, die mittels eines Saugers den Deckel anhebt und dabei zusammen mit der Abtastvorrichtung nach oben schwenkt. Gerade die Anordnung nach der US-A 4 553 369 setzt aber auch zwingend voraus, daß für jedes Kodierungselement des Kodierungsflächenstückes ein eigenes Abtastelement vorgesehen sein muß. Eine gerätefeste Anordnung der Abtastvorrichtung bei schwenkbarem Kassettendeckel ist also hierbei nicht möglich und es ist keine Abtastvorrichtung mit nur einem Sensor bei Vorhandensein von mehreren Kodierungselementen oder Kodierungsflächenstücken möglich. Außerdem wäre eine sehr einfache Deckelöffnungsvorrichtung, beispielsweise nach der DE 3 232 187 C2 nicht verwendbar, weil hiermit die Schwenkbewegung der Abtastvorrichtung nicht gekoppelt werden könnte. Damit wird die Ausbildung eines zugeordneten Kassettenent- und -beladegerätes zwangsweise sehr aufwendig.

Der Erfindung liegt daher die Aufgabe zugrunde, eine einfache, nachträglich anbringbare, mit wenigen Elementen eine große Vielfalt von Kodierungsmöglichkeiten erlaubende Kodieranordnung für Röntgenfilmkassetten unterschiedlicher Formate und ggf. für unterschiedliche Filmsorten und eine zu ihrer Auswertung geeignete Vorrichtung in einem Kassettenent- und Beladegerät zu schaffen.

Diese Aufgabe wird bezüglich der Kassette erfindungsgemäß gelöst durch die Merkmale des Hauptanspruchs sowie bezüglich einer geeigneten Vorrichtung durch die Merkmale des Unteranspruchs 7. Weitere vorteilhafte Ausgestaltungen der Erfindung sind den übrigen Unteransprüchen entnehmbar.

Schon wenn wenigstens zwei nachträglich anbringbare Kodierungsflächenstücke an definierter Stelle einer erfindungsgemäßen Röntgenfilmkassette vorgesehen sind, wobei bei magnetischen Kodierflächenstücken für jede einzelne Codestelle drei Möglichkeiten (Nordpol, Südpol, unmagnetisch) und bei leitenden und nichtleitenden Kodierungsflächenstücken je Codestelle zwei Möglichkeiten der Kodierung gegeben sind, ergeben sich nach der Erfindung im ersten Fall $3^2$, das sind 9, und im zweiten Fall $2^2$, das sind 4 Möglichkeiten einer nachträglich anbringbaren unterschiedlichen Kodierung von verschiedenen Kassetten. Bereits bei nur drei an den Kassetten vorgesehenen Codestellen und magnetischer Kodierung mit drei Möglichkeiten (Nordpol, Südpol, unmagnetisch) lassen sich schon $3^3$, das sind 27 verschiedene Kodierungen für unterschiedliche Kassettenformate und Filmsorten oder ähnliche Unterschiede der Kassetten erzielen. Die Bestückung mit den verschiedenen Codeflächenstücken kann dabei nachträglich vorgenommen oder ergänzt werden. So könnten beispielsweise die ersten beiden Codestellen für die unterschiedliche Formatkodierung vom Kassetten- und Gerätehersteller kodiert werden, während die dritte Codestelle einer Kassette vom Hersteller oder Benutzer nach angegebenen Vorschriften entsprechend der in die Kassette einzulegenden Filmsorte, z.B. Normalfilm oder Film für eine Kassette mit zusätzlichem Streuraster oder Mammografiefilm kodiert werden könnte. Ein an sich bekannter Rechner mit Vergleichseinrichtung kann dann im Ent- und Beladegerät die jeweilige Kodierung erkennen und das nach Kassettenformat und Filmsorte entsprechende Dispenserfach zur Neubeladung einer Kassette bereitstellen. So läßt sich mit einfachen und wenigen Mitteln eine große Vielfalt von Kodierungsmöglichkeiten für unterschiedliche Röntgenfilmkassetten verwirklichen und nachträglich vorsehen, wobei naturgemäß die Kodierung mit der Programmierung des Rechners und der Vergleichseinrichtung im Ent- und Beladegerät übereinstimmen muß.

Die Erfindung wird nachfolgend anhand von Zeichnungen näher erläutert. Es zeigen

Fig. 1 eine perspektivische Darstellung einer erfindungsgemäßen Röntgenblattfilmkassette,

Fig. 2 einen Schnitt durch die erfindungswesentlichen Teile der Kassette nach Figur 1 gemäß der Schnittlinie II-II,

Fig. 3 bis 7 je einen Schnitt durch unterschiedliche, gemäß den Figuren 1 und 2 verwendbare Kodierungsflächenstücke,

Fig. 8 einen Schnitt durch ein mit einem entsprechenden Gerät zusammenwirkendes Kassettenteil gemäß den Figuren 1 und 2,

Fig. 9 eine schematische Darstellung einer anderen möglichen Ausführungsform eines erfindungsgemäßen Kassettenent- und -beladegerätes mit einer einzugebenden erfindungsgemäßen Kassette.

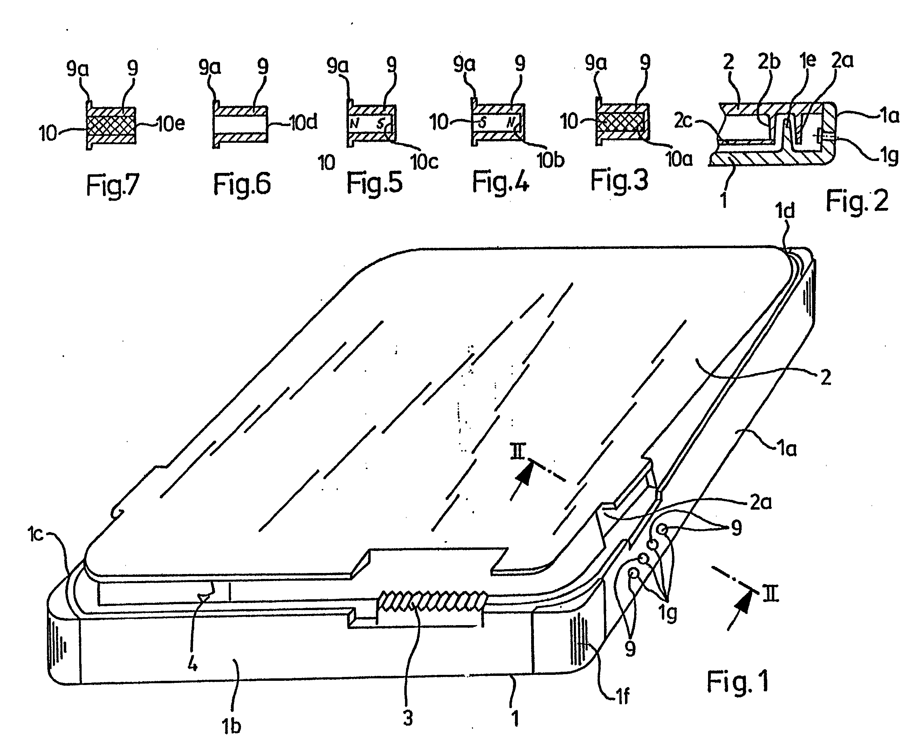

In den Figuren 1, 2 sind ein den Röntgenstrahlen zuzuwendendes Kassettenteil, im folgenden als Bodenteil bezeichnet, mit 1, ein über nicht sichtbare, bekannte Scharniere längs einer Seite daran angelenktes Deckelteil mit 2, Verschluß- bzw. Entriegelungsmittel zwischen beiden Teilen 1 und 2 mit 3 und 4, gemäß dem gezeigten Beispiel am Bodenteil 1 vorgesehene Kassettenschmalseiten mit 1a bis 1c, im geschlossenen Zustand der Kassette ineinandergreifende Labyrinthrippen an Boden- und Deckelteil 1 bzw. 2 mit 1e bzw. 2a und 2b und eine an den inneren Labyrinthrippen 2b des Deckelteils 2 sowie weiteren nicht gezeigten Rippen angeordnete Versteifungsplatine mit 2c bezeichnet. An der Versteifungsplatine 2c sowie in der inneren Bodenfläche sind in nicht gezeigter Weise Magnetfolie und Gegenfolie sowie Verstärkerfolien vorgesehen, zwischen die ein Röntgenblattfilm einzulegen ist.

In der Figur 9 sind lediglich die Seitenwände 5a und 5b und eine zur Seitenwand 5a parallele, verschiebbare Seitenwand 5c eines Schubfaches 6 für eine Kassette 1, 2 in einem nicht näher dargestellten Kassettenent- und -beladegerät 7 dargestellt. Für die Ein gabe der Kassetten in das Schubfach und dessen lichtdichtes Verschließen sowie das Öffnen der Kassette, das Entnehmen und wieder Zuführen und wieder Verschließen und Ausgeben einer Kassette können alle hierfür bereits bekannten Anordnungen verwendet werden, weshalb diese Mittel der Übersichtlichkeit halber nicht gezeigt sind. Wesentlich ist hierbei nur, daß alle in das Schubfach 6 eingegebenen Kassetten an einer in der positionierten Lage der jeweiligen Kassette bei allen Kassetten der verschiedenen Formate dieselbe Lage im Gerät 7 einnehmenden Kassettenecke 1f positioniert bzw. justiert sind. Gemäß den gezeigten Ausführungsbeispielen ist dies jeweils die in Einschubrichtung 8 in das Gerät 7 rechte vordere Kassettenecke. Dabei wird eine eingegebene Kassette in Einschubrichtung 8 bis zu einem stirnseitigen Anschlag 5b und durch die seitliche, verschiebbare Seitenwand 5c in Anlage an die feste Seitenwand 5a geschoben.

Gemäß den Ausführungsbeispielen nach den Figuren 1 bis 9 sind in einem vorgegebenen Abstand von der im Gerät 7 zu positionierenden Kassettenecke 1f in der Seitenwand 1a nebeneinanderliegende Codestellen 1g, vorzugsweise mit gleichem Abstand voneinander, vorgesehen. Gemäß diesen Ausführungsbeispielen sind sie als durch die die Kassettenschmalseite 1a bildende Wand hindurchgehende Bohrungen ausgebildet. Bei dem gezeigten Beispiel sind vier derartige Codestellen 1g vorhanden; es könnten jedoch auch weniger oder mehr Codestellen 1g angeordnet sein. Diese Codestellen 1g werden nun durch Kodierungsflächenstücke unterschiedlicher Beschaffenheit ausgefüllt. Die Kodierungsflächenstücke können durch die Stirnflächen kleiner in die Bohrung 1g eingesetzter Stifte 9 gebildet werden. Die Stifte 9 mit unterschiedlichen Kodierungsflächenstücken weisen zweckmäßigerweise einen Bund 9a auf und können aus einem hohlzylindrischen Kunststoffteil bestehen. Dieses wird bei geöffneter Kassette 1, 2 von innen her durch je eine Bohrung 1g gesteckt und mit seinem im Kasseteninnern liegenden Bund 9a mit der Wand 1a beispielsweise verklebt. Somit kann ein derartiger Kodierungsstift 9 nicht aus seiner Bohrung 1g herausfallen. Kodierungsstifte 9 mit unterschiedlichen Kodierungsflächenstücken werden zweckmäßigerweise in unterschiedlichen Farben hergestellt, damit bei der Kodierung einer Kassette nicht durch Verwechslungen der Kodierungsflächenstücke Fehler und damit später eine falsche Beladung der entsprechenden Kassette entstehen können.

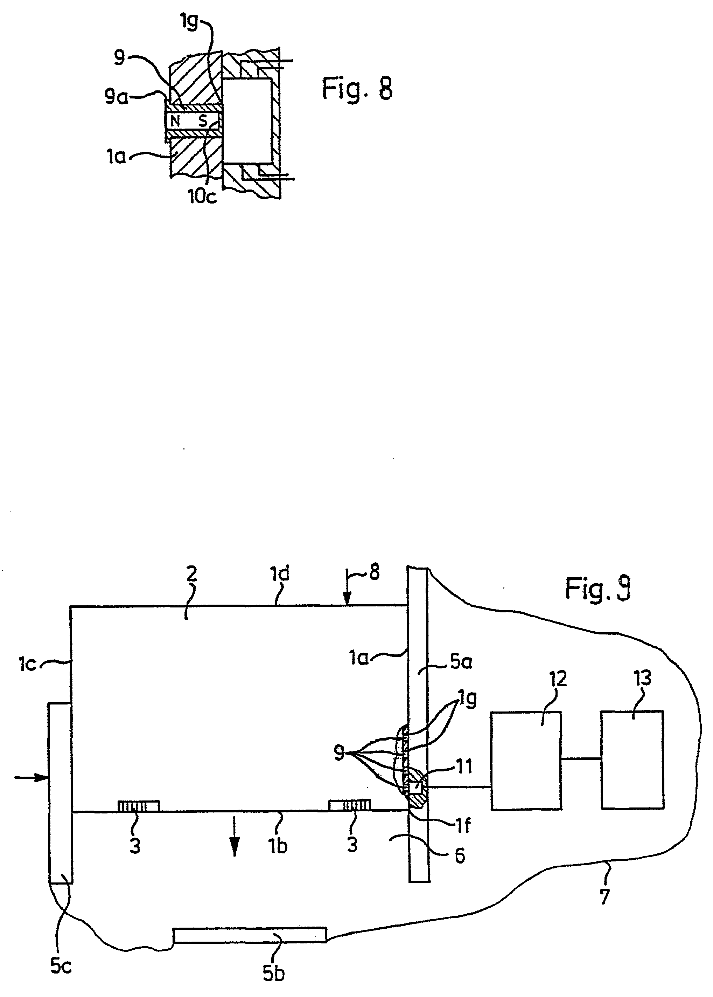

Gemäß den Figuren 3 bis 5 werden die unterschiedlichen Kodierungsflächenstücke 10a, 10b, 10c von drei verschiedenen Kodierstiften 9 dadurch gebildet, daß in die Hohlstifte 9 magnetisch unterschiedliche Kerne 10 eingelegt sind. Der Kern 10 zur Bildung des Kodierungsflächenstückes 10a nach Figur 3 ist beispielsweise unmagnetisch und auch nicht magnetisierbar, kann also beispielsweise aus Kunststoff bestehen. Der Kern 10 zur Bildung des Kodierungsflächenstückes 10b nach Figur 4 wird durch einen kleinen Magnetdipol gebildet, dessen Nordpol N zur Stiftstirnseite schaut. Das Kodierungsflächenstück 10b wird also durch einen Nordpol N eines Magneten gebildet. Das Kodierungsflächenstück 10c gemäß Figur 5 wird demgegenüber durch einen Südpol S eines Magnetstiftchens gebildet. Nun kann in jede der Bohrungen 1g wahleise ein unmagnetischer Kodierstift ein mit dem Nordpol N nach außen schauender Kodierstift oder ein mit dem Südpol S nach außen schauender Kodierstift eingesetzt werden. Somit ergeben sich für die Kodierung von Kassetten 1, 2 gemäß dem gezeigten Ausführungsbeispiel $3^4$ Kodierungsmöglichkeiten, das sind 81 verschiedene Möglichkeiten zur Kodierung von unterschiedlichen, in den Geräten 7 verwendbaren Kassetten. Diese Kassetten 1, 2 können sich einerseits durch das Kassettenformat, aber auch durch die Innenausstattung der Kassetten gleichen Formats (z.B. mit Streugitter oder für die Mammografie) und deren Beladung mit unterschiedlichen Filmsorten unterscheiden. Entsprechend unterschiedliche Kodierungen durch unterschiedliche Kombinationen von Kodierungsflächenstücken 10a, 10b, 10c können dann durch Sonden 11, bei unterschiedlichen magnetischen Codes z.B. durch Hallsonden 11 abgetastet werden, die an den Codestellen 1g zugeordneten Stellen der Seitenwand 5a eines Gerätes 7 angeordnet und bei richtig positionierten Kassettenecken 1f den Codestellen 1g exakt zugeordnet sind. Die Meßergebnisse der Sonden 11 werden dann einem bei derartigen Geräten bekannten Rechner 12 zugeführt und nach Ermittlung der Eigenart (Format, Film) einer eingegebenen Kassette 1, 2 an eine elektronische Vergleichseinrichtung 13 weitergegeben. Diese vergleicht auf an sich bekannte Weise, ob ein Film entsprechender Eigenart und entsprechenden Formats in Vorratsmagazinen des Gerätes vorhanden ist und steuert ggf. nach Entladung einer Kassette deren Wiederbeladung. Ist entsprechender Film nicht vorhanden, so kann in ebenfalls an sich bekannter Weise eine entleerte Kassette wieder ungeladen aus dem Gerät 7 heraustransportiert werden.

Bei dem Ausführungsbeispiel nach Figur 9 ist nur eine Sonde 11 in der Schachtwand 5a angeordnet. Sie liegt jedoch so, daß eine durch die bewegliche Wand 5c an die Schachtwand 5a zunächst herangeführte Kassette 1, 2 bei ihrem Transport in Pfeilrichtung 8 in ihre Anschlagstellung mit allen ihren Codestellen 1g, 9, 10 an der Sonde 11 vorbeigeführt wird. Die Sonde 11 nach diesem Ausführungsbeispiel muß also die Codes der einzelnen Codestellen 1g, 9, 10 einer Codekombination nacheinander abtasten, wobei im Rechner die Format- und Filmbestimmung einer in das Gerät 7 eingeführten Kassette durch die nacheinander eingehenden einzelnen Meßergebnisse erfolgt.

Anstelle von Codeflächenstücken 10a, 10b, 10c mit unterschiedlicher Magnetisierung 0, N oder S könnten in die Kodierstifte 10 auch Stücke 10 unterschiedlicher elektrischer Fähigkeit eingesetzt sein, wobei ein Kodierungsflächenstück 10d aus elektrisch leitendem Material und ein weiteres Kodierflächenstück 10e z.B. aus nicht leitendem Kunststoff bestehen könnte. In diesem Fall kann jede Codestelle 1g nur mit einem von zwei unterschiedlichen Codeflächenstücken 10d bzw. 10e bestückt werden. Bei vier Codestellen 1g würden sich dann $2^4$, also 16 unterschiedliche Codekombinationen ergeben. Die Sonde oder Sonden 11 in einem Kassettenent und -beladegerät müssen dann auf elektrische Leitfähigkeit bzw. Nichtleitfähigkeit ansprechen, wobei diese Ausgestaltung nur bei Kunststoffkassetten anwendbar ist, während Magnetcodes auch bei Metallkassetten verwendbar sind.

Der Einfachheit halber sind nicht alle möglichen Ausführungsbeispiele nach der Erfindung in den Figuren gezeigt. So wäre es im Prinzip möglich, die Kodierungsflächenstücke in einer Reihe in einer Kassettenflachseite am Rand des Bildfeldes oder im Bereich zwischen Labyrinthrippen 2a, 2b vorzusehen und die Sonden im Gerät dann entsprechend oberhalb der entsprechenden Kassettenflachseite vorzusehen. Auch die Anordnung von mehreren nebeneinander liegenden Reihen von Kodierungsflächenstücken, z.B. von zwei mal zwei Codestellen, wäre grundsätzlich möglich, ebenso wie deren Anordnung in der in Eingaberichtung 8 stirnseitigen Schmalseite 1b der Kassette, wobei jeweils auch die Sonden im Gerät entsprechend auzuordnen sind.

## Patentansprüche

1. Röntgenblattfilmkassette mit zwei je eine Flachseite aufweisenden, auseinanderklappbaren und miteinander verriegelbaren Kassettenteilen (1, 2), die durch Schmalseiten (1a–1c) genormter, aber bei verschiedenen Kassettentypen unterschiedlicher Länge begrenzt sind, wobei die Kassette in einer Vorrichtung (7) zum Ent- und Beladen von Kassetten unterschiedlicher Typen verwendbar ist und die Kassette in der Vorrichtung (7) an einer bei allen verwendbaren Kassettentypen gegenüber der Vorrichtung in der positionierten Stellung gleichgelagerten, in Eingaberichtung (8) der Kassette in die Vorrichtung stirnseitigen Kassettenecke (1f) positionierbar ist, wobei eine Reihe von wenigstens zwei nebeneinanderliegenden Kodierungsflächenstücken (10a bis 10e), die bezüglich ihrer Magnetisierung oder ihrer elektrischen Leitfähigkeit abtastbar sind, in definierter Lage mit definiertem Abstand von der positionierbaren Kassettenecke (1f) angebracht ist, dadurch gekennzeichnet, daß die Kodierungsflächenstücke (10a bis 10e) in derjenigen der beiden die zu positionierende Kassettenecke (1f) bildenden Schmalseiten (1a, 1b), die in Eingaberichtung (8) verläuft, eingesetzt sind und als Stifte (9, 10) ausgebildet sind, die zur nachträglichen Kodierung der Kassette in im Querschnitt gleichgeformte Durchbrüche (1g) oder Ausnehmungen der entsprechenden Kassettenseite (1a) einsetzbar, vorzugsweise einklebbar sind.

2. Röntgenblattfilmkassette mit zwei je eine Flachseite aufweisenden, auseinanderklappbaren und miteinander verriegelbaren Kassettenteilen (1, 2), die durch Schmalseiten (1a–1c) genormter, aber bei verschiedenen Kassettentypen unterschiedlicher Länge begrenzt sind, wobei die Kassette in einer Vorrichtung (7) zum Ent- und Beladen von Kassetten unterschiedlicher Typen verwendbar ist und die Kassette in der Vorrichtung (7) an einer bei allen verwendbaren Kassettentypen gegenüber der Vorrichtung in der positionierten Stellung gleichgelagerten, in Eingaberichtung (8) der Kassette in die Vorrichtung stirnseitigen Kassettenecke (1f) positionierbar ist, wobei eine Reihe von wenigstens zwei nebeneinanderliegenden Kodierungsflächenstücken (10a bis 10e), die bezüglich ihrer Magnetisierung oder ihrer elektrischen Leitfähigkeit abtastbar sind, in definierter Lage mit definiertem Abstand von der positionierbaren Kassettenecke (1f) angebracht sind, dadurch gekennzeichnet, daß die Kodierungsflächenstücke in derjenigen der beiden die zu positionierende Kassettenecke (1f) bildenden Schmalseiten (1a, 1b), die in Eingaberichtung (8) verläuft, eingesetzt sind, und daß ein Kodierungsflächenstück (14) durch je ein Blättchen (14) gebildet wird, das zur nachträglichen Kodierung der Kassette an der Außenfläche der entsprechenden Kassettenschmalseite (1a) anbringbar, vorzugsweise anklebbar ist, und daß an der Außenfläche der Kassettenschmalseite (1a) dem bündigen Einsetzen der Blättchen (14) dienende Vertiefungen vorgesehen sind.

3. Kassette nach Anspruch 1 oder 2, dadurch gekennzeichnet, daß die bezüglich ihrer Magnetisierung abtastbaren Kodierungsflächenstücke (10a bis 10c) durch magnetische Dipole (N, S), die je nach der gewünschten Kodierung mit ihrem Nord- oder ihrem Südpol (N bzw. S) gegen die Kassettenoberfläche schauen, und/oder nicht magnetische Flächenstücke (10a) gebildet werden.

4. Kassette nach Anspruch 1 oder 2, dadurch gekennzeichnet, daß die bezüglich ihrer elektrischen Leitfähigkeit abtastbaren Kodierungsflächenstücke (10d, 10e) durch Metall- bzw. Nichtmetallflächenstücke (10d bzw. 10e) gebildet werden.

5. Kassette nach Anspruch 1, dadurch gekennzeichnet, daß die Stifte (9) einen Bund (9a) oder Anschlag aufweisen, mit dem sie mit der Innenfläche der den jeweiligen Durchbruch (1g) aufweisenden Kassettenschmalseite (1a) in Anschlag bringbar sind.

6. Kassette nach einem der vorhergehenden Ansprüche, dadurch gekennzeichnet, daß innerhalb der Durchbrüche (1g) bzw. der darin eingesetzten Stifte (9, 10) bzw. der Blättchen wenigstens eine weitere Kassettenwand, wie eine Labyrinthrippe (2a) eines Kassettenteiles (2) oder eine Befestigungsfläche (2c) für Magnetandruck- und/oder Verstärkerfolien, zumindest bei geschlossener Kassette, angeordnet ist.

7. Vorrichtung zum Ent- und Beladen von Kassetten nach Anspruch 1 oder 2 oder einem anderen der vorhergehenden Ansprüche, dadurch gekennzeichnet, daß im Positionierungsweg der Kassetten bzw. der an diesen vorgesehenen Kodierungsflächenstücke (1g) eine die magnetische Eigenschaft bzw. eine die elektrische Leitfähigkeit der Kodierungsflächenstücke (10a bis 10e bzw. 15) abtastende Sonde (11) angeordnet ist, durch welche nacheinander die Kodierung der einzelnen Kodierungsflächenstücke abtastbar und einem elektronischen Rechner (12) und/oder einer elektronischen Vergleichseinrichtung (13) zur Ermittlung des Kassettenformats und/oder der in der Kassette enthaltenen Filmsorte oder dergl. zuführbar ist.

## Claims

1. X-ray sheet film cassette having two unfoldable and interlockable cassette parts (1, 2), each having a flat side and bounded by narrow sides (1a–1c) of standardized lengths but varying with different cassette types, the cassette being suitable for use in a device (7) for the unloading and loading of cassettes of different types and the cassette being positionable in the device (7) at a cassette corner (1f) which is identically situated with respect to the device in the positioned state for all usable cassette types and is on the front side in insertion direction (8)) of the cassette into the device, a row of at least two adjacent coding area pieces (10a to 10e), which can be scanned with respect to their magnetization or their electrical conductivity, being attached in defined position at a defined distance from the positionable cassette corner (1f), characterized in that the coding area pieces (10a to 10e) are fitted in the one of the two narrow sides (1a, 1b), forming the cassette corner (1f) to be positioned, which runs in insertion direction (8), and are designed as pins (9, 10) which can be fitted, preferably stuck, for subsequent coding of the cassette, into cross-sectionally identically shaped breakthroughs (1g) or recesses of the corresponding cassette side (1a).

2. X-ray sheet film cassette having two unfoldable and interlockable cassette parts (1, 2), each having a flat side and bounded by narrow sides (1a–1c) of standardized lengths but varying with different cassette types, the cassette being suitable for use in a device (7) for the unloading and loading of cassettes of different types and the cassette being positionable in the device (7) at a cassette corner (1f) which is identically situated with respect to the device in the positioned state for all usable cassette types and is on the front side in insertion direction (8) of the cassette into the device, a row of at least two adjacent coding area pieces (10a to 10e), which can be scanned with respect to their magnetization or their electrical conductivity, being attached in defined position at a defined distance from the positionabe cassette corner (1f), characterized in that the coding area pieces are fitted in the one of the two narrow sides (1a, 1b), forming the cassette corner (1f) to be positioned, which runs in insertion direction (8), and in that a coding area piece (14) is formed in each case by a slip (14) which can be attached, preferably stuck, for subsequent coding of the cassette, on the outside of the corresponding cassette narrow side (1a), and in that depressions for the flush fitting of the slips (14) are provided on the outside of the cassette narrow side (1a).

3. Cassette according to Claim 1 or 2, characterized in that the coding area pieces (10a to 10c) which can be scanned with respect to their magnetization are formed by magnetic dipoles (N, S) which, according to the desired coding, face with their north pole or their south pole (N or S) towards the cassette surface, and/or are formed by non-magnetic area pieces (10a).

4. Cassette according to Claim 1 or 2, characterized in that the coding area pieces (10d, 10e) which can be scanned with respect to their electrical conductivity are formed by metal or non-metal area pieces (10d or 10e).

5. Cassette according to Claim 1, characterized in that the pins (9) have a collar (9a) or stop, by which they can be brought up against the inside of the cassette narrow side (1a) having the respective breakthrough (1g).

6. Cassette according to one of the preceding Claims characterized in that there is arranged within the break, throughs (1g), or the pins (9, 10) fitted therein, or the slips, at least one further cassette wall, such as a labyrinth rib (2a) of a cassette part (2) or a fastening area (2c) for magnetic pressure and/or intensifying screens, at least with closed cassette.

7. Apparatus for the unloading and loading of cassettes according to Claim 1 or 2 or another of the preceding Claims, characterized in that there is arranged in the positioning path of the cassettes, or of the coding area pieces (1g) provided on the latter, a probe (11) scanning the magnetic property or a probe (11) scanning the electrical conductivity of the coding area pieces (10a to 10e or 15), by which probe the coding of the individual coding area pieces can be scanned successively and fed to an electronic computer (12) and/or to an electronic comparison device (13) to establish the cassette format and/or the film type contained in the cassette.

**Revendications**

1. Cassette de film radiographique en feuille se composant de deux parties de cassette (1, 2) portant chacune un côté plat, rabattables et verrouillables entre elles, se terminant par des petits côtés (1a à 1c) de longueur normalisée mais variant suivant les types de cassettes, ladite cassette étant utilisable dans un dispositif (7) de chargement et de déchargement de cassettes de différents types et pouvant être positionnée dans le dispositif (7) par rapport à un angle de cassette (1f) disposé frontalement dans le dispositif dans la direction d'introduction (8) de la cassette et disposé au même endroit par rapport au dispositif après positionnement pour tous les types de cassettes utilisables et une série d'au moins deux plats de codage (10a à 10e) juxtaposés, pouvant être lus en exploitant leur magnétisation ou leur conductivité électrique, étant placés dans une position définie, à une distance définie par rapport à l'angle de la cassette (1f), une série d'au moins deux plats de codage (10a à 10e) juxtaposés, dont la magnétisation ou la conductivité électrique peut être lue, étant disposée en un endroit défini, à une distance définie de l'angle de la cassette (1f) positionnable, caractérisée en ce que les plats de codage (10a à 10e) sont placés dans celui des deux petits côtés (1a, 1b) formant l'angle de la cassette (1f) à positionner qui coïncide avec la direction d'introduction (8) et ont la forme de goujons (9, 10) qui sont insérés, et de préférence collés, dans des traversées (1g) ou des évidements de même forme ménagés dans le côté de la cassette (1a) afin de permettre un codage a posteriori de la cassette.

2. Cassette de film radiographique en feuille se composant de deux parties de cassette (1, 2) portant chacune un côté plat, rabattables et verrouillables entre elles, se terminant par des petits côtés (1a à 1c) de longueur normalisée mais variant suivant les types de cassettes, ladite cassette étant utilisable dans un dispositif (7) de chargement et de déchargement de cassettes de différents types et pouvant être positionnée dans le dispositif (7) par rapport à un angle de cassette (1f) disposé frontalement dans le dispositif dans la direction d'introduction (8) de la cassette et disposé au même endroit par rapport au dispositif après positionnement pour tous les types de cassettes utilisables et une série d'au moins deux plats de codage (10a à 10e) juxtaposés, pouvant être lus en exploitant leur magnétisation ou leur conductivité électrique, étant placés dans une position définie, à une distance définie par rapport à l'angle de la cassette (1f) positionnable, caractérisée en ce que les plats de codage sont placés dans celui des deux petits côtés (1a, 1b) formant l'angle de la cassette (1f) à positionner qui coïncide avec la direction d'introduction (8) et en ce qu'un plat de codage (14) est constitué d'une plaquette (14) qui est placée, et de préférence collée sur la surface extérieure du petit côté de la cassette (1a) afin de permettre un codage a posteriori de la cassette, et en ce qu'il est prévu sur la surface extérieure du petit côté de la cassette (1a) des évidements destinés à recevoir les plaquettes (14) de manière qu'elles affleurent.

3. Cassette selon la revendication 1 ou 2, caractérisée en ce que les plats de rodage (10a à 10c) dont l'état de magnétisation peut être lu sont constitués par des dipôles magnétiques (N, S) qui, suivant le codage voulu, sont placés avec le pôle nord ou le pôle sud (N ou S) vers la surface de la cassette, et/ou par des plats de codage non magnétiques (10a).

4. Cassette selon la revendication 1 ou 2, caractérisée en ce que les plats de codage (10d, 10e) dont la conductivité électrique peut être lue sont constitués de pièces métalliques ou non métalliques (10d ou 10e).

5. Cassette selon la revendication 1, caractérisée en ce que les goujons (9) présentent une collerette (9a) ou butée qui permet de les appuyer en butée contre la face interne du petit côté de la cassette (1a) présentant la traversée correspondante (1g).

6. Cassette selon l'une des revendications précédentes, caractérisée en ce que, au milieu des traversées (1g) ou des goujons (9, 10) qui y sont insérés ou des plaquettes, au moins une autre paroi de la cassette, comme une nervure en forme de labyrinthe (2a) d'une partie de la cassette (2) ou une surface de fixation (2c) est destinée aux films d'appui magnétique ou de renforcement, renforcement, au moins lorsque la cassette est fermée.

7. Dispositif pour le chargement et le déchargement de cassettes selon la revendication 1 ou 2 ou une autre des revendications précédentes, caractérisé en ce que, sur la course de positionnement des cassettes ou des plats de codage (1g) qui sont disposés sur celle-ci, se trouve montée une sonde (11) lisant l'état de magnétisation ou la conductivité électrique des plats de codage (10a à 10e et 15), et permettant ainsi de lire successivement les codages des différents plats de codage et de les envoyer à un calculateur électronique (12) et/ou à un dispositif électronique comparateur (13) afin de déterminer le format de la cassette et/ou le type de film que celle-ci contient.

Fig.1

Fig.2

Fig.3

Fig.4

Fig.5

Fig.6

Fig.7

Fig. 8

Fig. 9